# EUROPÄISCHE PATENTSCHRIFT

(11) **EP 3 008 607 B1**
(45) Veröffentlichungstag und Bekanntmachung des Hinweises auf die Patenterteilung: **21.02.2018**
(21) Anmeldenummer: 14747323.5
(22) Anmeldetag: 21.07.2014
(51) Int. Cl.: H04L 12/40

(54) **SELEKTION EINES SCHNITTSTELLENTYPS**
SELECTION OF AN INTERFACE TYPE
SÉLECTION D'UN TYPE D'INTERFACE

(30) Priorität: 31.07.2013 DE 102013215039
(43) Veröffentlichungstag der Anmeldung: 20.04.2016
(73) Patentinhaber: Siemens Aktiengesellschaft, 80333 München (DE)
(72) Erfinder: BIENEK, Frank, 38304 Wolfenbüttel (DE)
(86) Internationale Anmeldenummer: PCT/EP2014/065584
(87) Internationale Veröffentlichungsnummer: WO 2015/014645

(56) Entgegenhaltungen:
- US-A- 5 909 464
- US-A- 6 018 549

## Beschreibung

Die Erfindung betrifft eine Vorrichtung umfassend eine Schnittstelleneinheit, ein Verfahren zur Selektion einer Schnittstelle sowie ein System mit mindestens einer solchen Vorrichtung.

Die Realisierung innovativer Gerätetechnik unterliegt hohen Anforderungen hinsichtlich Größe, Kostenaufwand und flexible Einsetzbarkeit. So soll beispielsweise in der Zugsicherungstechnik zum Einsatz kommende Gerätetechnik klein, kostengünstig und universell einsetzbar sein. Schon bei der Konzeption der Geräte ist es erforderlich, eine fortschreitende Integrationsdichte und Miniaturisierung der elektronischen Komponenten, Baugruppen sowie elektronischen Modulen zu nutzen und ein hohes Maß an Flexibilität bereit zu stellen.

Durch eine verbreitete Implementierung von serieller und/oder paralleler Datenübertragung in der Gerätetechnik wird eine große Anzahl von Kommunikations-Schnittstellen benötigt. Dies erfordert eine Vielzahl von Steckverbindern, die z.B. auf Schnittstellenkarten einen entsprechenden Bauraum benötigen.

Eine serielle Schnittstelle (auch bezeichnet als serielle Kommunikations-Schnittstelle) dient z.B. dem Datenaustausch zwischen Computern und Peripheriegeräten, wobei bei einer seriellen Datenübertragung Daten-Bits nacheinander (seriell) über eine Leitung übertragen werden. Beispiele für serielle Schnittstellen sind:
- EIA-232 (RS-232, V.10),
- EIA-422 (RS-422, V.11),
- EIA-423 (RS-423, V.10),
- EIA-485 (RS-485, V.11),
- 20 mA Stromschleife (TTY, IBIS).

Die seriellen Schnittstellen nutzen jeweils individuelle Steckverbinder der Bauform Sub-D (9 polig), deren Ausführung teilweise standardisiert ist.

Aktuelle Geräte benötigen oft unterschiedliche serielle Schnittstellentypen, da für eine zu realisierende Anwendung z.B. entweder eine serielle Schnittstelle vom Typ RS-485 oder eine serielle Schnittstelle vom Typ RS-422 benötigt wird.

Bisher werden die genannten seriellen Schnittstellen direkt in ein Schaltungsdesign fest eingebettet und jeweils durch einen UART (Universal Asynchronus Receiver Transceiver) über ein Sendesignal (Transmit Data, TXD), ein Empfangssignal (Receive Data, RXD) und ein Steuersignal zur Sende- und Empfangsumschaltung (Request To Send, RTS) angesteuert.

Ein UART ist beispielsweise eine elektronische Schaltung zur Realisierung von digitalen seriellen Schnittstellen. Dabei kann es sich sowohl um ein eigenständiges elektronisches Bauelement (z.B. einen UART-Chip bzw. UART-Baustein) oder um einen Funktionsblock eines höherintegrierten Bauteils (z.B. eines Mikrocontrollers oder Field Programmable Gate Arrays, FPGAs) handeln.

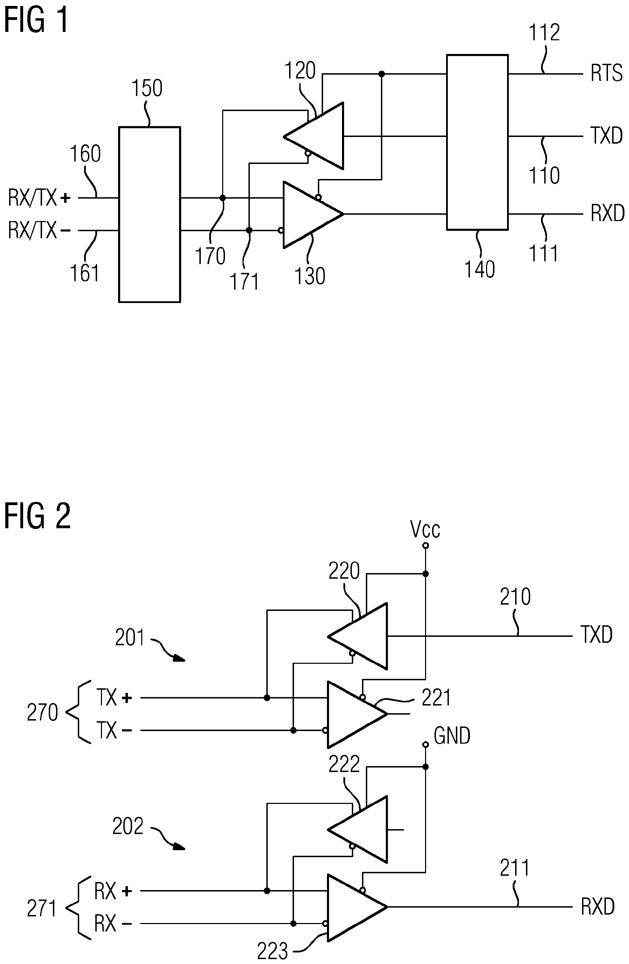

Eine prinzipielle Darstellung einer seriellen Schnittstelle RS-485 ist in Fig.1 dargestellt. Fig.1 umfasst einen Sender 120 sowie einen Empfänger 130. Der Sender 120 weist einen Dateneingang, einen nichtinvertierenden Ausgang, einen invertierenden Ausgang und einen Steuereingang auf. Der Empfänger 130 weist einen invertierenden Dateneingang, einen nichtinvertierenden Dateneingang, einen Datenausgang und einen Steuereingang auf.

Ein zu übermittelndes Datensignal 110 ist mit dem Dateneingang des Senders 120 verbunden, der nichtinvertierende Ausgang des Senders 120 ist mit einem Knoten 170 und der invertierenden Ausgang des Senders 120 ist mit einem Knoten 171 verbunden.

Ein empfangenes Datensignal 111 wird von dem Ausgang des Empfängers 130 bereitgestellt. Der nichtinvertierende Eingang des Empfängers 130 ist mit dem Knoten 170 verbunden und der invertierende Eingang des Empfängers 13o ist mit dem Knoten 171 verbunden.

An den Knoten 170 und 171 liegt ein differentielles Sende- oder Empfangssignal an. Beispielsweise kann ein solches differentielles Sende-/Empfangssignal über Anschlüsse 160 und 161 über eine Einheit 150 mit den Knoten 170 und 171 verbunden sein. Die Einheit 150 umfasst beispielsweise eine Busterminierung sowie eine Schutzschaltung.

Ein Steuersignal 112 ist mit dem Steuereingang des Senders 120 verbunden. Weiterhin ist das Steuersignal 112 in invertierter Form mit dem Steuereingang des Empfängers 130 verbunden. Beispielsweise kann hierfür der Steuereingang des Empfängers mit einem Inverter (einem logischen NICHT-Gatter) versehen sein. Somit wird über das Steuersignal 112 entweder der Sender 120 oder der Empfänger 130 aktiviert, so dass im Fall des aktiven Empfängers 130 das differentielle Signal über die Anschlüsse 160 und 161 in das empfangene Datensignal 111 umwandelbar ist und im Fall des aktiven Senders das Datensignal 110 als differentielles Signal über die Anschlüsse 160 und 161 übermittelbar ist.

Optional können das empfangene Datensignal 111, das (zu übermittelnde) Datensignal 110 sowie das Steuersignal galvanisch von dem Sender 120 und dem Empfänger 130 getrennt ausgeführt sein. Dies ist in Fig.1 angedeutet durch eine optionale Einheit 140, die eine solche galvanische Trennung bereitstellt.

In Fig.2 ist eine prinzipielle Darstellung einer seriellen Schnittstelle RS-422 dargestellt. Die serielle Schnittstelle RS-422 ermöglicht eine Einrichtung von Full-Duplex Punkt-zu-Punkt-Verbindungen, wobei für eine solche bidirektionale Datenübertragung für jede Übertragungsrichtung jeweils ein Leitungspaar vorgesehen ist.

Im Prinzip umfasst die serielle Schnittstelle RS-422 zwei der in Fig.1 dargestellte serielle Schnittstellen vom Typ RS-485, wobei für jede Übertragungsrichtung jeweils eine serielle Schnittstelle RS-485 zum Einsatz kommt. Dabei ist eine erste serielle Schnittstelle 201 vom Typ RS-485 für die Umwandlung eines zu übermittelnden Datensignals 210 in ein differentielles Sendesignal 270 und eine zweite serielle Schnittstelle 202 vom Typ RS-485 für die Umwandlung eines eingehenden differentiellen Empfangssignals 271 in ein empfangenes Datensignal 211 vorgesehen.

In der Darstellung von Fig.2 umfasst jede serielle Schnittstelle 201, 202 je einen Sender 220, 222 und einen Empfänger 221, 223, wobei die serielle Schnittstelle 201 nur den Sender 220 nutzt und den Empfänger 221 deaktiviert. Dies geschieht dadurch, dass der Steuereingang des Senders 220 über eine Verbindung mit der Versorgungsspannung Vcc aktiviert und der Steuereingang des Empfängers 221 über eine Verbindung mit der Versorgungsspannung Vcc und einen Inverter (oder über eine Verbindung mit Masse GND ohne Inverter) deaktiviert wird. Entsprechend nutzt die serielle Schnittstelle 202 nur den Empfänger 223 und deaktiviert den Sender 222, indem der Steuereingang des Senders 222 durch die Verbindung mit Masse GND deaktiviert ist und der Steuereingang des Empfängers 223 durch die Verbindung mit Masse GND über einen Inverter (oder über eine Verbindung mit der Versorgungsspannung Vcc ohne Inverter) aktiviert ist.

Fig.2 zeigt zur besseren Übersicht nicht die in Fig.1 dargestellte optionale galvanische Trennung sowie die Funktionalität der in Fig.1 dargestellten Einheit 150 (Busterminierung und Schutzschaltung). Derartige Erweiterungen sind jedoch auch für Fig.2 möglich.

Serielle Schnittstellen können durch die Verwendung von Hardware-Jumpern konfiguriert werden: Beispielsweise kann so eine serielle Schnittstelle entweder vom Typ RS-485 oder vom Typ RS-422 bereitgestellt werden.

Hardware-Jumper sind kleine Steckbrücken, die als Kurzschlussstecker auf Kontakte von Stiftleisten gesteckt werden. Dadurch werden Pins, auf die diese Jumper gesteckt werden, elektrisch miteinander verbunden. Hardware-Jumper können auch in Form von 0 Ohm (SMD-) Widerständen oder Dual-Inline-Schalter realisiert werden.

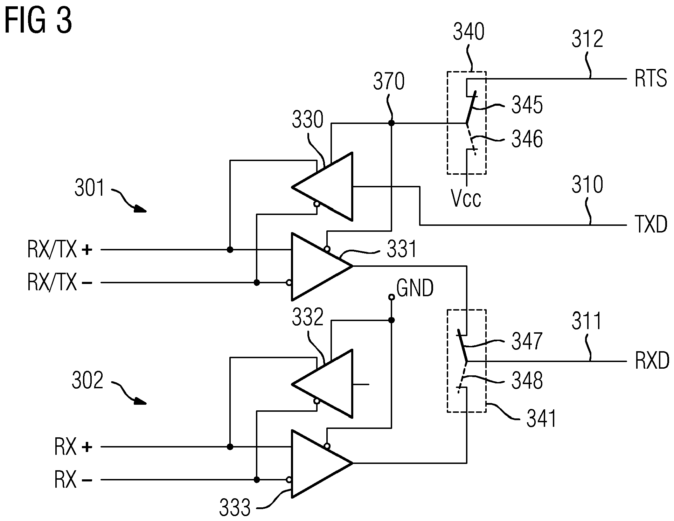

Fig.3 zeigt eine schematische Darstellung einer Schaltungsanordnung zur flexiblen Konfiguration einer seriellen Schnittstelle mittels Hardware-Jumpern.

Die dargestellte serielle Schnittstelle umfasst zwei serielle Schnittstellen 301, 302 vom Typ RS-485 (siehe diesbezüglich auch Fig.1). Die serielle Schnittstelle 301 umfasst einen Sender 330 und einen Empfänger 331, die serielle Schnittstelle 302 umfasst einen Sender 332 und einen Empfänger 333.

Der Steuereingang des Senders 332 ist dabei mit Masse GND verbunden, so dass der Sender 332 dauerhaft inaktiv geschaltet ist. Der invertierte Steuereingang des Empfängers 333 ist ebenfalls mit Masse GND verbunden und somit der Empfänger 333 dauerhaft aktiv geschaltet.

Des Weiteren ist eine Stiftleiste 340 vorgesehen, die entweder mit einem Hardware-Jumper 345 oder mit einem Hardware-Jumper 346 kontaktierbar ist. Eine andere Stiftleiste 341 ist entweder mit einem Hardware-Jumper 347 oder mit einem Hardware-Jumper 348 kontaktierbar. Pro Stiftleiste kann zu einer Zeit nur eine Kontaktierung mittels eines Hardware-Jumpers hergestellt werden.

Ein zu übermittelndes Datensignal 310 ist mit dem Dateneingang des Senders 330 verbunden. Der Steuereingang des Senders 330 und der invertierte Steuereingang des Empfängers 331 sind jeweils mit einem Knoten 370 verbunden. Der Knoten 370 kann über den Hardware-Jumper 345 mit einem Steuersignal 312 oder über den Hardware-Jumper 346 mit der Versorgungsspannung Vcc verbunden werden.

Der Ausgang des Empfängers 331 kann über den Hardware-Jumper 347 ein empfangenes Datensignal 311 bereitstellen. Alternativ kann der Ausgang des Empfängers 333 über den Hardware-Jumper 348 das empfangene Datensignal bereitstellen.

So wird durch den Hardware-Jumper 345 und den Hardware-Jumper 347 die serielle Schnittstelle als serielle Schnittstelle vom Typ RS-485 konfiguriert. Alternativ wird durch den Hardware-Jumper 346 und den Hardware-Jumper 348 die serielle Schnittstelle als serielle Schnittstelle vom Typ RS-422 konfiguriert.

Fig.3 zeigt zur besseren Übersicht nicht die in Fig.1 dargestellte optionale galvanische Trennung sowie die Funktionalität der in Fig.1 dargestellten Einheit 150 (Busterminierung und Schutzschaltung). Derartige Erweiterungen sind jedoch auch für Fig.2 möglich.

Die in Fig.3 dargestellte Schaltung ermöglicht die Konfiguration unterschiedlicher serieller Schnittstellen mittels Hardware-Jumpern. Auch diese Ausführung weist mehrere Nachteile auf: Bei einer flexiblen Konfiguration unter Verwendung von 0 Ohm (SMD-) Widerständen als Hardware-Jumper müssen diese in einem Bestückungsprozess entsprechend der benötigten seriellen Schnittstellen platziert werden. Bei Steckbrücken oder DIL-Schaltern als Hardware-Jumper müssen diese ebenfalls bereits während eines Fertigungsprozesses berücksichtigt werden. Zusätzlich sind die Hardware-Jumper (z.B. Steckbrücken oder DIL-Schalter) innerhalb des Gerätes verbaut und können nachträglich nur umständlich durch Öffnen des Gerätes modifiziert werden. Jede Änderung ist somit fehleranfällig und kann darüber hinaus auch zum Erlöschen der Gewährleistung führen.

Aus der Patentschrift US 5 909 464 A ist eine gattungsgemäße Vorrichtung und ein gattungsgemäßes Verfahren bekannt. Die Vorrichtung umfasst eine Schnittstelleneinheit in Form eines Datenterminalgerätes, wobei das Datenterminalgerät einen Steckverbinder mit einem Schnittstellen-Selektions-Kontakt aufweist. Das Datenterminalgerät ist derart eingerichtet, dass abhängig von einem Auswahlsignal, welches an dem Schnittstellen-Selektions-Kontakt anliegt, ein Schnittstellentyp aus mindestens zwei Schnittstellentypen selektierbar ist. Dabei erfolgt die Bereitstellung verschiedener Werte des Auswahlsignals dadurch, dass verschiedene Datenkommunikationsgeräte über entsprechend verschiedene Kabel mit dem Steckverbinder verbunden werden.

Weiterhin ist aus der Patentschrift US 6 018 549 A eine Schnittstelleneinheit in Form einer Treiberschnittstelle mit einer Schaltung bekannt. Dabei werden abhängig von einem Modus-Auswahlsignal, welches an einem Eingang der Schaltung anliegt, Teile der Schaltung aktiviert. Die aktivierten Teile der Schaltung passen Ausgangssignale an einen Schnittstellenstandard aus einer Mehrzahl auswählbarer Schnittstellenstandards an.

Der Erfindung liegt somit die Aufgabe zugrunde, eine verbesserte Flexibilität bei der Realisierung von seriellen Schnittstellen zu schaffen, insbesondere unter Vermeidung der oben genannten Nachteile.

Diese Aufgabe wird gemäß den Merkmalen der unabhängigen Ansprüche gelöst. Bevorzugte Ausführungsformen sind insbesondere den abhängigen Ansprüchen entnehmbar.

Zur Lösung der Aufgabe ist ausgehend von einer gattungsgemäßen Vorrichtung (US 5 909 464 A), umfassend eine Schnittstelleneinheit, wobei die Schnittstelleneinheit derart eingerichtet ist, dass abhängig von einem Auswahlsignal ein Schnittstellentyp aus mindestens zwei Schnittstellentypen selektierbar ist, Folgendes vorgesehen: Die Vorrichtung ist erfindungsgemäß derart gestaltet, dass mittels des Auswahlsignals, welches mittels eines ablaufenden Programms bereitgestellt wird, nacheinander unterschiedliche Schnittstellentypen aus den mindestens zwei Schnittstellentypen vorübergehend selektierbar sind, wobei derjenige Schnittstellentyp länger als die vorgegebene Zeitdauer selektiert wird, für den ein vorgegebenes Signal bestimmbar ist.

Somit ist eine automatische Erkennung des Schnittstellentyps möglich: Mittels des Auswahlsignals können z.B. nacheinander die (oder ein Teil der) Schnittstellentypen aktiviert werden. Wenn während der vorübergehenden Selektion der Schnittstelle ein vorgegebenes Signal, z.B. ein gültiges Signal oder ein sonstiges Signal, das einen Hinweis auf die Korrektheit des momentan selektierten Schnittstellentyps liefert, festgestellt wird, kann die Einstellung des Auswahlsignals beibehalten werden - der Schnittstellentyp ist selektiert. Wird hingegen kein derartiges vorgegebenes ("gültiges") Signal erkannt, so wird, z.B. nach Ablauf einer vorgegebenen Zeitdauer, ein nächster Schnittstellentyp selektiert. Dies kann ggf. fortgesetzt werden solange bis ein vorgegebenes Signal erkannt und ein funktionierender Schnittstellentyp gefunden ist. Optional kann nach einer vorgegebenen Zeitdauer die erfolglose Selektion von unpassenden Schnittstellentypen abgebrochen oder (für eine bestimmte Zeit) ausgesetzt werden.

Bei den Schnittstellentypen handelt es sich insbesondere um serielle Schnittstellen. Somit weist die Schnittstelleneinheit mindestens zwei Schnittstellentypen auf, so dass eine Kommunikation gemäß mehreren Typen von (seriellen) Schnittstellen möglich ist. Der Schnittstellentyp wird mittels des Auswahlsignals, z.B. per Software und/oder von einer Kontrolleinheit, bereitgestellt. Die Vorrichtung ermöglicht somit ein Umschalten zwischen unterschiedlichen Schnittstellentypen ohne dass hierzu eine Veränderung der Hardware vorgenommen werden muss. Dies ist insbesondere von Vorteil, wenn mehrere unterschiedliche Schnittstellentypen gemeinsam eine Steckverbindung, jedoch mit unterschiedlichen Belegungen oder Signalen, nutzen. Beispielsweise kann der vorliegende Ansatz genutzt werden, um eine 9-polige Sub-D Steckverbindung unterschiedlich zu belegen. Diese Belegung kann abhängig von vorgegebenen Bedingungen oder anderen genutzten Schnittstellen flexibel angepasst werden.

Damit ist es z.B. möglich, die Größe der Vorrichtung zu reduzieren und weniger Hardwaretypen für eine Schnittstellenkarte bereitzustellen. Statt vieler Hardwareausprägungen für die unterschiedlichen Schnittstellen werden diese per Software konfiguriert. Dies ist kostengünstig und erhöht die Flexibilität, wenn vor Ort eine Konfiguration geändert werden soll.

Das Auswahlsignal kann z.B. durch Laden eines Registers oder Speicherbereichs vorgegeben und z.B. an einem Port eines Controllers während der Schnittstellen-Initialisierung beim Einschalten des Gerätes bereitgestellt werden.

Durch die logische Konfiguration einer seriellen Schnittstelle kann auf eine Konfiguration mittels Hardware-Jumper auf der Hardware-Ebene verzichtet werden. Vorteilhaft kann ein Gerät immer gleich gefertigt werden, es sind keine Gerätevarianten in Bezug auf die Anwendung erforderlich. Die gemeinsame Nutzung der Treiber-Bausteine und des UART-Bausteins, sowie die Nutzung eines gemeinsamen Steckverbinders am Gerät bleiben erhalten.

Eine Weiterbildung ist es, dass
- Schnittstelleneinheit eine Logikeinheit und mindestens zwei Treiber aufweist, wobei für jeden Schnittstellentyp mindestens ein Treiber vorgesehen ist,
- wobei anhand des Auswahlsignals über die Logikeinheit der Schnittstellentyp selektierbar ist.

Die Logikeinheit weist vorzugsweise logische Gatter oder entsprechende Funktionalitäten auf, anhand derer die einzelnen Schnittstellentypen aktivierbar sind. Die Logikeinheit kann derart ausgeführt sein, dass sie die Treiber zumindest teilweise aktiv oder inaktiv schaltet und somit die Übermittlung und/oder den Empfang von Daten über den jeweils selektierten Schnittstellentyp ermöglicht.

Bei den Treibern handelt es sich z.B. um für den jeweiligen Schnittstellentyp bekannte Komponenten zur Übertragung bzw. zum Empfangen von Daten.

Eine andere Weiterbildung ist es, dass die Logikeinheit Teil eines programmierbaren Bausteins ist.

Beispielsweise kann die Logikeinheit Teil eines ggf. bereits vorhandenen Bausteins, z.B. eines Mikrocontrollers, eines Prozessors, eines ASICs oder eines FPGAs sein.

Insbesondere ist es eine Weiterbildung, dass pro Schnittstellentyp ein Sender und ein Empfänger vorgesehen sind.

Bei dem Sender handelt es sich z.B. um einen Treiber, der ein zu versendendes Datensignal in Form eines differentiellen Datensignals versendet. Bei dem Empfänger handelt es sich z.B. um einen Treiber, der ein differentielles Signal empfängt und in ein nichtdifferentielles Empfangssignal umwandelt.

Auch ist es eine Weiterbildung, dass anhand der Schnittstelleneinheit
- ein zu übermittelndes Datensignal mittels des selektierten Schnittstellentyps übertragbar ist und
- über den selektierten Schnittstellentyp ein Datensignal empfangbar ist.

Das zu übertragende Signal wird beispielsweise von einer Kommunikationseinheit bereitgestellt und von der Vorrichtung mittels der hier erläuterten Schnittstelleneinheit gemäß dem gewählten Schnittstellentyp übermittelt.

Entsprechend können Signale empfangen werden: Die Schnittstelleneinheit erfasst die über den selektierten Schnittstellentyp eingehenden Signale und leitet diese in dem vorgegebenen Format weiter.

Optional können auch zwei der hier beschriebenen Vorrichtungen miteinander so verschaltet sein, dass sich eine Umwandlung von einem ersten einstellbaren Schnittstellentyp in einen zweiten einstellbaren Schnittstellentyp ergibt.

Ferner ist es eine Weiterbildung, dass die Vorrichtung einen Steckverbinder umfasst, dessen Kontakte entsprechend des selektierten Schnittstellentyps belegbar sind.

Im Rahmen einer zusätzlichen Weiterbildung ist der Steckverbinder ein Sub-D Steckverbinder.

Eine nächste Weiterbildung besteht darin, dass der Schnittstellentyp einer der folgenden ist:
- eine RS-485 Schnittstelle;
- eine RS-422 Schnittstelle;
- eine RS-232 Schnittstelle;
- eine Stromschleife (eine TTY Schnittstelle).

Eine Ausgestaltung ist es, dass die Vorrichtung eine Auswahleinheit aufweist, die abhängig von dem Auswahlsignal den Schnittstellentyp aus mindestens zwei Schnittstellentypen selektiert.

Eine Ausführungsform besteht darin, dass die Auswahleinheit ein 1-aus-n Decoder ist.

Beispielsweise kann ein Decoder verwendet werden, der aus einem anliegenden binären Signal nur eine von n Leitungen aktiv schaltet. So können über k Eingänge des Decoders n=2^{k} Leitungen aktiviert werden.

Auch ist es eine Ausgestaltung, dass das vorgegebene Signal ein gültiges Datentelegramm umfasst.

Die vorstehend genannte Aufgabe wird ausgehend von einem gattungsgemäßen Verfahren (US 5,909,464 A), bei dem abhängig von einem Auswahlsignal ein Schnittstellentyp aus mindestens zwei Schnittstellentypen selektiert wird, auch dadurch gelöst, dass mittels des Auswahlsignals, welches mittels eines ablaufenden Programms bereitgestellt wird, nacheinander unterschiedliche Schnittstellentypen aus den mindestens zwei Schnittstellentypen für eine vorgegebene Zeitdauer selektiert werden, wobei derjenige Schnittstellentyp länger als die vorgegebene Zeitdauer selektiert wird, für den ein vorgegebenes Signal bestimmbar ist.

Eine Ausgestaltung besteht darin, dass die mindestens zwei Schnittstellentypen serielle Kommunikationsschnittstellen sind.

Eine Weiterbildung besteht darin, dass das vorgegebene Signal ein gültiges Datentelegramm umfasst.

Auch wird zur Lösung der oben genannten Aufgabe ein System vorgeschlagen umfassend mindestens eine der hierin beschriebenen Vorrichtung.

Die vorstehenden Erläuterungen betreffend die Vorrichtung gelten für das Verfahren bzw. das System entsprechend. Die Vorrichtung kann in einer Komponente oder verteilt in mehreren Komponenten ausgeführt sein.

Die hier vorgestellte Lösung umfasst ferner ein Computerprogrammprodukt, das direkt in einen Speicher eines digitalen Computers ladbar ist, umfassend Programmcodeteile, die dazu geeignet sind, Schritte des hier beschriebenen Verfahrens durchzuführen.

Weiterhin wird das oben genannte Problem gelöst mittels eines computerlesbaren Speichermediums, z.B. eines beliebigen Speichers, umfassend von einem Computer ausführbare Anweisungen (z.B. in Form von Programmcode), die dazu geeignet sind, dass der Computer Schritte des hier beschriebenen Verfahrens durchführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.

Es zeigen:
- Fig.4: in Form einer schematischen Darstellung eine beispielhafte Ausgestaltung einer Schaltungsanordnung zur flexiblen Realisierung einer seriellen Schnittstelle,
- Fig.5: eine alternative Ausgestaltungsvariante der in Fig.4 dargestellten Schaltungsanordnung,
- Fig.6: ein Schaltungsanordnung zur flexiblen Realisierung einer erweiterten seriellen Schnittstelle und
- Fig.7: mögliche Ausführungsformen von Schnittstellenkarten.

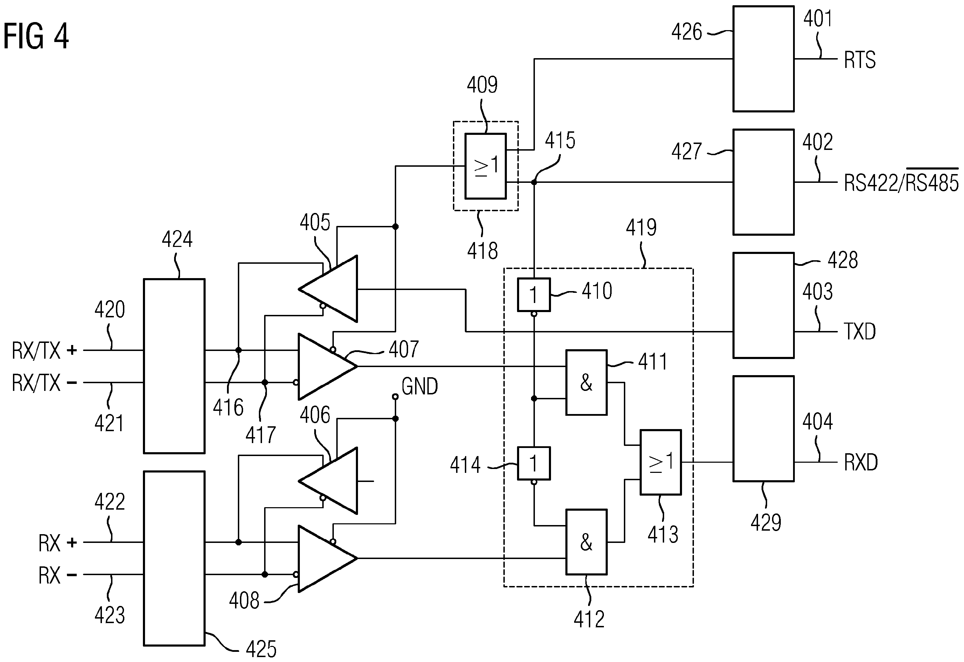

Fig.4 zeigt eine schematische Schaltungsanordnung zur flexiblen Konfiguration einer seriellen Schnittstelle mittels Software-Initialisierung durch Verwendung von Logikbausteinen bzw. Logik-Gatter.

Fig.4 umfasst Sender 405, 406 sowie einen Empfänger 407, 408. Der Sender 405, 406 weist einen Dateneingang, einen nichtinvertierenden Ausgang, einen invertierenden Ausgang und einen Steuereingang auf. Der Empfänger 407, 408 weist einen invertierenden Dateneingang, einen nichtinvertierenden Dateneingang, einen Datenausgang und einen Steuereingang auf. Sender und Empfänger der seriellen Schnittstelle können jeweils auch als Treiber oder Treiberbausteine bezeichnet werden.

Ein Steuersignal 401 wird dem ersten Eingang eines ODER-Gatters 409 zugeführt, der zweite Eingang des ODER-Gatters 409 ist mit einem Knoten 415 verbunden. An den Knoten 415 ist ein Auswahlsignal 402 anlegbar, anhand dessen der Typ der seriellen Schnittstelle konfigurierbar ist.

Der Ausgang des ODER-Gatters 409 ist mit dem Steuereingang des Senders 405 und über einen Inverter mit dem Steuereingang des Empfängers 407 verbunden, so dass abhängig von einem Signal an dem Ausgang des ODER-Gatters 409 entweder der Sender 405 aktiv und der Empfänger 407 inaktiv oder der Sender 405 inaktiv und der Empfänger 407 aktiv ist. Beispielsweise kann hierfür ein zusätzlicher Inverter vorgesehen sein, der dem Steuereingang des Empfängers 407 vorgeschaltet ist (in Fig.4 ist dies angedeutet mit einem kleinen Kreis am Steuereingang des Empfängers 407). Ist der Ausgang des ODER-Gatters 409 logisch "1", so ist der Sender 405 aktiv und der Empfänger 407 inaktiv, für logisch "0" am Ausgang des ODER-Gatters 409 ist der Sender 405 inaktiv und der Empfänger 407 aktiv.

Der Sender 406 ist dauerhaft inaktiv und der Empfänger 408 ist dauerhaft aktiv geschaltet. Dies wird z.B. erreicht dadurch, dass der Steuereingang des Senders 406 direkt und der Steuereingang des Empfängers 408 über einen Inverter auf Masse GND (also auf logisch "0") liegen.

An den Eingang des Senders 405 ist ein zu übermittelndes Datensignal 403 anlegbar. Der nichtinvertierende Ausgang des Senders 405 ist mit einem Knoten 416 und der invertierende Ausgang des Senders 405 ist mit einem Knoten 417 verbunden. Der Knoten 416 ist mit dem nichtinvertierenden Eingang des Empfängers 407 verbunden und der Knoten 417 ist mit dem invertierenden Eingang des Empfängers 407 verbunden.

An den Knoten 416 und 417 liegt ein differentielles Sende- oder Empfangssignal an. Beispielsweise kann ein solches differentielles Sende- oder Empfangssignal über die Anschlüsse 420 und 421 über eine Einheit 424 mit den Knoten 416 und 417 verbunden sein. Die Einheit 424 umfasst beispielsweise eine Busterminierung sowie eine Schutzschaltung.

Der Ausgang des Empfängers 407 ist mit dem ersten Eingang eines UND-Gatters 411 verbunden. Der Knoten 415 ist über einen Inverter 410 mit dem zweiten Eingang des UND-Gatters 411 verbunden. Der Ausgang des UND-Gatters 411 ist mit dem ersten Eingang eines ODER-Gatters 413 verbunden und der Ausgang eines UND-Gatters 412 ist mit dem zweiten Eingang des ODER-Gatters 413 verbunden. Der zweite Eingang des UND-Gatters 411 ist über einen Inverter 414 mit dem ersten Eingang des UND-Gatters 412 verbunden. Der Ausgang des Empfängers 408 ist mit dem zweiten Eingang des UND-Gatters 412 verbunden. Über den Ausgang des ODER-Gatters 413 wird ein empfangenes Datensignal 404 bereitgestellt.

Ein differentielles Empfangssignal kann auch über Anschlüsse 422 und 423 eingehen, wobei der Anschluss 422 mit dem nichtinvertierenden Eingang des Empfängers 408 und der Anschluss 423 mit dem invertierenden Eingang des Empfängers 408 verbunden ist. Beispielsweise kann das differentielle Empfangssignal über die Anschlüsse 422 und 423 über eine Einheit 425 mit den Eingängen des Empfängers 408 verbunden sein. Die Einheit 425 umfasst beispielsweise eine Busterminierung sowie eine Schutzschaltung.

Der Sender 406 ist hierbei inaktiv; der Vollständigkeit halber kann der invertierende Ausgang des Senders 406 mit dem invertierenden Eingang des Empfängers 408 und der nichtinvertierende Ausgang des Senders 406 mit dem nichtinvertierenden Eingang des Empfängers 408 verbunden sein.

Optional können das Steuersignal 401, das Auswahlsignal 402, das zu übermittelnde Datensignal 403 und das empfangene Datensignal 404 jeweils galvanisch von der den Logikbausteinen entkoppelt sein. Hierzu sind in Fig.4 optionale Einheiten 426 bis 429 vorgesehen, wobei jede der Einheiten 426 bis 429 eine galvanische Trennung bereitstellt.

Fig.4 zeigt einen Logikblock 418 ("Sende-Logikblock") umfassend das ODER-Gatter 409 und einen Logikblock 419 ("Empfangs-Logikblock") umfassend die Gatter 410 bis 414. Mittels des Auswahlsignals 402 wird bestimmt, ob die serielle Schnittstelle vom Typ RS-422 (Auswahlsignal 402 ist logisch "1") oder vom Typ RS-485 (Auswahlsignal 402 ist logisch "0") genutzt werden soll.

Das Auswahlsignal 402 kann von einem UART-Baustein, einem Prozessor, einer Kontrolleinheit oder einer sonstigen Einheit z.B. mittels eines ablaufenden Programms bereitgestellt werden.

Ist das Auswahlsignal 402 logisch "1" (serielle Schnittstelle vom Typ RS-422), so ist der Sender 405 aktiv, der Empfänger 407 inaktiv. Damit wird über die Anschlüsse 420 und 421 das zu übermittelnde Datensignal 403 als differentielles Signal versendet. Weiterhin liegt am Ausgang des UND-Gatters 411 logisch"0" und am Ausgang des UND-Gatters 412 (und damit auch am Ausgang des ODER-Gatters 413) das am Ausgang des Empfängers 408 bereitgestellte Empfangssignal basierend auf dem an den Anschlüssen 422 und 423 anliegenden differentiellen Empfangssignal.

Ist das Auswahlsignal 402 logisch "0" (serielle Schnittstelle vom Typ RS-485), so ist abhängig von dem Steuersignal 401 der Sender 405 aktiv und der Empfänger 407 inaktiv oder umgekehrt. Weiterhin liegt am Ausgang des UND-Gatters 411 das am Ausgang des Empfängers 407 bereitgestellte Empfangssignal an. Der Ausgang des UND-Gatters 412 ist logisch "0". Somit liegt abhängig von dem Steuersignal 401 entweder am Ausgang des ODER-Gatters 413 das empfangene Datensignal basierend auf dem an den Anschlüssen 420 und 421 anliegenden differentiellen Empfangssignal an oder es wird über die Anschlüsse 420 und 421 das zu übermittelnde Datensignal 403 als differentielles Signal versendet.

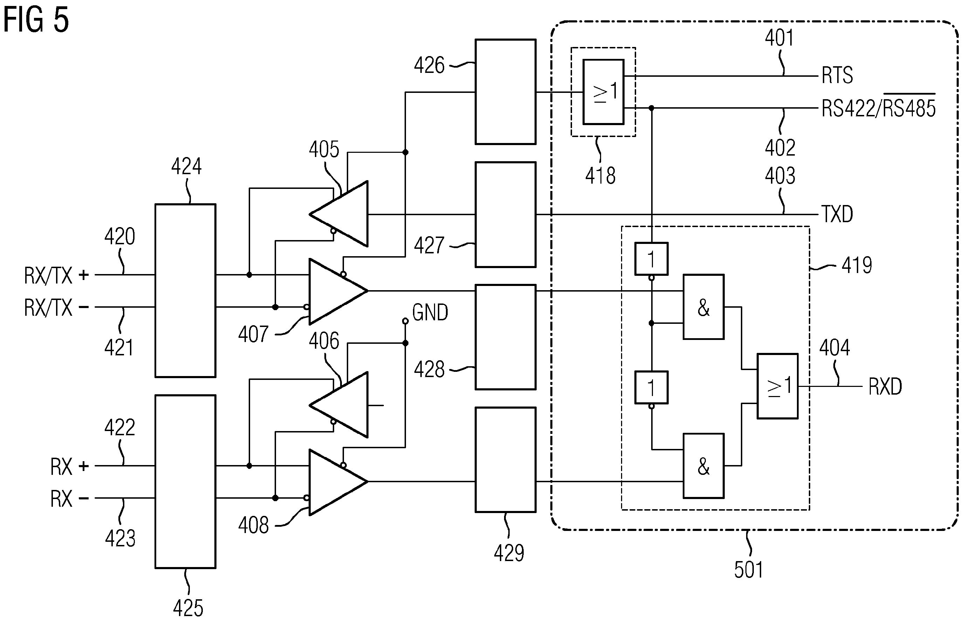

Fig.5 zeigt eine schematische Darstellung einer Schaltungsanordnung zur flexiblen Realisierung einer seriellen Schnittstelle, die auf der in Fig.4 dargestellten seriellen Schnittstelle basiert. Die Funktion der in Fig.5 gezeigten Schaltungsanordnung entspricht der Schaltungsanordnung gemäß Fig.4.

Im Unterschied zu der in Fig.4 dargestellten Schaltungsanordnung sind die in Fig.4 dargestellten Logikblöcke 418 und 419 in Fig.5 in einem (ggfs. bereits vorhandenen) programmierbaren Baustein 501 (z.B. einem FPGA) integriert.

Die optionale Einheiten 426 bis 429 sind in Fig.5 beispielhaft zwischen dem programmierbaren Baustein 501 und den Sendern/Empfängern 405 bis 408 angeordnet.

Bei einer Realisierung einer seriellen Schnittstelle vom Typ RS-485 oder RS-422 mittels des programmierbaren Bausteins 501 kann der zusätzliche Bauteilaufwand für Logik-gatter reduziert werden. Beispielsweise wird nur ein zusätzlicher Anschluss (Port) für das Auswahlsignal 402 bereitgestellt.

Weiterhin kann eine gewünschte Konfiguration der seriellen Schnittstellen vorgegeben werden, wobei diese Konfiguration dann bei einer Initialisierung einer seriellen Schnittstelle wirksam wird. Alternativ oder zusätzlich kann die gewünschte Konfiguration im Rahmen einer variablen Projektierung vorab und/oder zur Laufzeit geändert werden.

Die Konfiguration der seriellen Schnittstelle kann z.B. wie folgt automatisiert erfolgen:
(1) Bei selbstständig sendenden Kommunikationsteilnehmern (z.B. intelligenten Sensoren) kann zuerst für eine vorgebbare Zeit auf z.B. der Empfangsseite (RXD) einer als Typ RS-485 konfigurierten seriellen Schnittstelle bestimmt werden, ob ein Datentelegramm empfangen werden kann. Ist die vorgebbare Zeit abgelaufen und wurde noch kein gültiges Datentelegramm empfangen, wird die serielle Schnittstelle (z.B. in den Typ RS-422) umkonfiguriert. Wird auf der Empfangsseite (RXD) innerhalb einer vorgebbaren Zeit erneut kein gültiges Datentelegramm empfangen, kann die serielle Schnittstelle wieder in den vorherigen Typ RS-485 umkonfiguriert werden. Sobald auf der Empfangsseite ein erstes gültiges Datentelegramm empfangen wird, bleibt die aktuelle Konfiguration der seriellen Schnittstelle gespeichert und es erfolgt keine weitere Umkonfiguration. Ansonsten kann immer nach Ablauf der vorgebbaren Zeit die Konfiguration des seriellen Schnittstellentyps geändert werden. Hierbei kann auch die vorgebbare Zeit selbst angepasst werden. Insbesondere kann unterschiedlich lange gewartet werden, bevor die Konfiguration von einem Schnittstellentyp auf den anderen Schnittstellentyp gewechselt wird. Auch kann eine Fehlermeldung ausgegeben werden, falls keine erfolgreiche Verbindung (in einer vorgegebenen weiteren Zeitdauer) herstellbar ist.
(2) Bei nicht selbstständig sendenden Kommunikationsteilnehmern kann zuerst ein Aufruf-Datentelegramm gesendet werden und dann für eine vorgebbare Zeit auf der Empfangsseite (RXD) einer z.B. als Typ RS-485 konfigurierten seriellen Schnittstelle auf ein Antwort-Datentelegramm gewartet werden. Wird ein gültiges Antwort-Datentelegramm empfangen, ist die Konfiguration der seriellen Schnittstelle abgeschlossen. Ist die vorgebbare Zeit ohne Empfang eines gültigen Antwort-Datentelegramms abgelaufen, wird die serielle Schnittstelle z.B. in den Typ RS-422 umkonfiguriert und erneut ein Aufruf-Datentelegramm gesendet. Wird ein gültiges Antwort-Datentelegramm empfangen, so ist die Konfiguration der seriellen Schnittstelle abgeschlossen. Andernfalls kann erneut die Schnittstelle rekonfiguriert und/oder eine Fehlermeldung generiert werden.
   Für den Fall, dass der Kommunikationsteilnehmer noch nicht bereit ist (z.B. bedingt durch eine längere Startphase), kann die beschriebene iterative Umkonfiguration der seriellen Schnittstelle solange wiederholt werden, bis das erste gültige Datentelegramm empfangen wird und damit die Konfiguration der seriellen Schnittstelle abgeschlossen ist.

Die in Fig.4 und Fig.5 dargestellten Beispiele zeigen mögliche flexible Implementierungen zur Konfiguration serieller Schnittstellen vom Typ RS-485 und RS-422. Grundsätzlich kann dieses Prinzip auf andere Schnittstellentypen erweitert werden. Vorzugsweise kann hierzu die gezeigte Schaltungsanordnung bezüglich der Treiberbausteine (Sender und Empfänger) und hinsichtlich einer gemeinsamen Nutzung einer Sub-D (9 poligen) Steckverbindung angepasst werden. Auch die Informationsbereitstellung zur Schnittstellenauswahl (z.B. Anzahl der Bits) kann flexibel angepasst werden.

### Erweiterung der Konfiguration der seriellen Schnittstelle um den Typ RS-232

Bei einer seriellen Schnittstelle vom Typ RS-232 werden andere Treiberbausteine verwendet als die bisher betrachteten Treiberbausteine für die seriellen Schnittstellen vom Typ RS-485 bzw. RS-422.

Vorteilhaft können jedoch auch bei der RS-232-Schnittstelle gemeinsame Pins eines Steckverbinders (z.B. der Sub-D Steckverbindung) für Empfangsdaten und Sendedaten verwendet werden. Die Sende- und Empfangspins der Treiberbausteine werden dafür elektrisch miteinander verbunden; dies wird auch als "wired-or"-Verdrahtung bezeichnet. Für eine solche "wired-or"-Verdrahtung werden vorzugsweise Treiberbausteine mit einem "tri-state"-Zustand eingesetzt.

Als tri-state fähig werden digitale Schaltungselemente bezeichnet, deren Ausgänge nicht nur den logischen Zustand "0" oder "1", sondern zusätzlich noch einen weiteren dritten hochohmigen Zustand ("high impedance") annehmen können. Hierfür stellen die Treiberbausteine einen Steuereingang (einen sog. "enable-pin") zur Verfügung. Der Treiberbaustein verhält sich im tri-state-Zustand als wäre sein Ausgang temporär von der Schaltung abgetrennt, so dass Treiberbausteine, die mit diesem parallel geschaltet, bzw. "wired-or" verdrahtet sind, nicht beeinflusst werden. Ein tri-state fähiger Treiberbaustein nimmt vielmehr dieselbe Ausgangsspannung wie die momentan aktiven Schnittstellen an. Daher wird auch in dem tri-state-Zustand eine maximal auftretende Schnittstellenspannung berücksichtigt, d.h. der Treiberbaustein ist vorzugsweise so dimensioniert, dass er diesen maximalen Spannungswert aushält.

Zur Auswahl eines gewünschten Typs einer seriellen Schnittstelle kann ein "1 aus n Decoder" eingesetzt werden. Der "1 aus n Decoder" bildet aus einer anliegenden Information (z.B. einem 2 Bit Datensignal) ein an mehreren Ausgängen anliegendes Ausgangssignal, wobei nur genau ein Ausgang (von z.B. 4 Ausgängen) ein logisches "1"-Signal als Steuersignal bzw. Auswahlsignal führt, die restlichen Ausgänge sind mit einem logischem "0"-Signal belegt.

So kann erreicht werden, dass nur ein Treiberbaustein das freigebende Steuersignal (enable-Signal) erhält und infolgedessen die serielle Schnittstelle entsprechend konfiguriert bzw. der gewünschte Typ der seriellen Schnittstelle aktiviert wird.

Weitere Signale zur Hardware-Steuerung, wie beispielsweise die auf der V.24 Empfehlung basierenden Signale DTR (Data Terminal Ready) und Clear to Send (CTS), können entsprechend dem in Fig.4 gezeigten Sende- und Empfangssignal 403, 404 durch geeignete Verschaltung mit den Logik-Gattern zusätzlich integriert werden.

Die gewünschte Konfiguration einer seriellen Schnittstelle kann auch bei einer Erweiterung um den Typ RS-232 als feste Projektierung einmalig festgelegt werden, oder im Rahmen eines Verfahrens als variable Projektierung zur Laufzeit geändert werden.

### Erweiterung der Konfiguration der seriellen Schnittstelle um den Typ "20 mA Stromschleife (TTY, IBIS)"

Im Gegensatz zu dem Typ RS-232 erfolgt bei einem als Stromschleife ausgebildeten Typ TTY die Datenübertragung nicht spannungsgesteuert, sondern mit einem eingeprägten Strom (z.B. 20 mA für logisch "1" bzw. "High" und 0 mA für logisch "0" bzw. "Low").

Die Stromschleife kann diskret aufgebaut sein beispielsweise mittels Optokopplern zur galvanischen Trennung. Die Stromschleife weist eine aktive und eine passive Seite auf, wobei die aktive Seite z.B. einen Konstantstrom in Höhe von 20 mA einspeist und die passive Seite keinen Strom einspeist.

Bei der Stromschleife werden die folgenden Zustände eines Ausgangstransistors der Stromschleife berücksichtigt:
- Logisch "1" bedeutet Stromfluss, d.h. der Ausgangstransistor ist leitend geschaltet.
- Logisch "0" bedeutet kein Stromfluss, d.h. der Ausgangstransistor ist hochohmig bzw. in einen Sperrmodus geschaltet.

Ist die Stromschleife nicht als Schnittstelle freigegeben bzw. ausgewählt, wird eine Sendeseite der Stromschleife durch eine Torschaltung mit einem z.B. über einen Decoder bereitgestellten logischen "0"-Signal in einen Sperrzustand versetzt.

Auf einer Empfangsseite der Stromschleife ist beispielsweise ein Optokoppler (mit einer Eingangs-Diode und einem Eingangs-Transistor) vorgesehen mit folgenden Schaltzuständen:
- Logisch "1" bedeutet Stromfluss, d.h. die Eingangs-Diode leuchtet und ein Eingangs-Transistor dadurch leitend geschaltet.
- Logisch "0" bedeutet kein Stromfluss, d.h. die Eingangs-Diode ist dunkel und der Eingangs-Transistor sperrt.

Um zu verhindern, dass die Eingangs-Diode in Abhängigkeit von einer anliegenden Spannung an einem Eingang des Empfangssignals leitend geschaltet wird und hierdurch eine unerwünschte Störung auftritt, wird bei einer nicht als Schnittstelle freigegebenen bzw. in den Sperrzustand geschalteten Stromschleife der Strompfad der Diodenstrecke vorzugsweise unterbrochen. Dieses kann z.B. über eine in Reihe zur Eingangs-Diode geschaltete Transistorstrecke erreicht werden.

Der hier beschriebene sende- und empfangsseitige Aufbau der Stromschleife gilt vorzugsweise sowohl für eine aktiv als auch für eine passiv eingesetzte Stromschleife. Bei der aktiv eingesetzten Stromschleife ist zusätzlich zu dem Sende- und Empfangssignal jeweils eine 20 mA Konstantstromquelle zu aktivieren. Dies kann beispielsweise über ein von einem Decoder bereitgestelltes Aktivierungssignal erfolgen. Das Einschleifen des Stroms auf der Sende- und Empfangsseite der Stromschleife kann z.B. über eine entsprechende Belegung eines Sub-D Steckverbinders erreicht werden.

Die gewünschte Konfiguration der seriellen Schnittstelle kann auch bei einer Erweiterung um den Typ "20 mA Stromschleife" als feste Projektierung einmalig festgelegt werden, oder im Rahmen eines Verfahrens als variable Projektierung zur Laufzeit geändert werden.

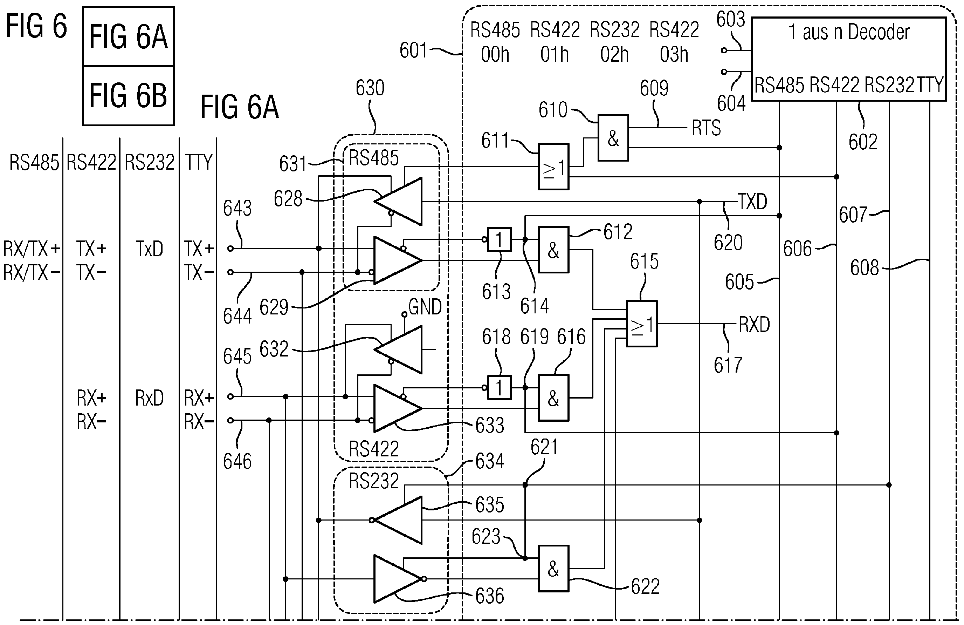

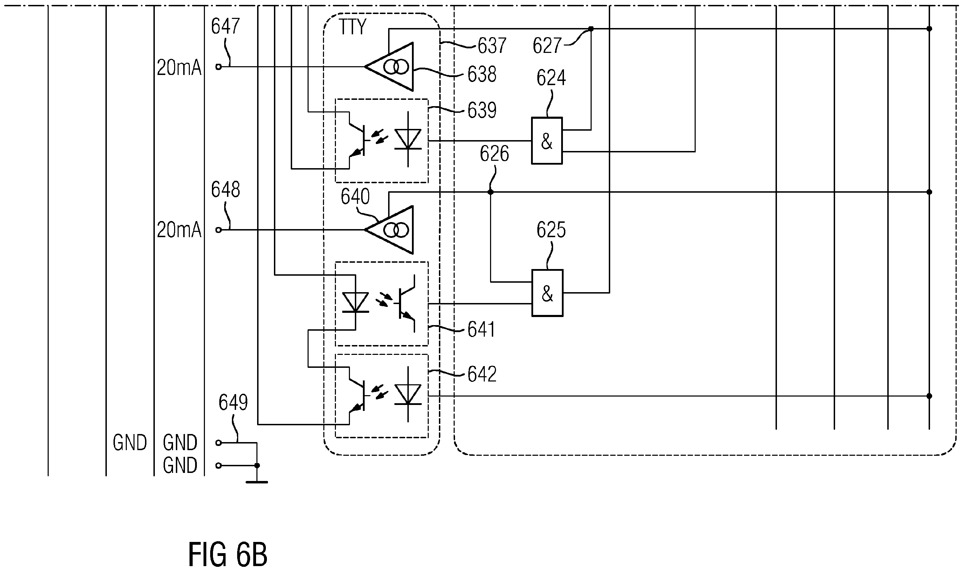

Fig.6 zeigt eine beispielhafte Schaltungsanordnung zur flexiblen Realisierung einer seriellen Schnittstelle, die je nach Anwendung z.B. über eine Software-Initialisierung gemäß einem der nachfolgend aufgeführten Typen konfiguriert werden kann:
- RS-485,
- RS-422,
- RS-232,
- Stromschleife bzw. TTY.

Zur besseren Übersicht sind in Fig.6 Elemente für eine weitere optionale galvanische Trennung sowie zur Busterminierung und Schutzbeschaltung nicht dargestellt. Die gezeigte Schaltungsanordnung kann jedoch bei Bedarf um solche Elemente ergänzt werden.

Ein 1-aus-n Decoder 602 umfasst zwei Eingänge 603, 604 und vier Ausgänge 605 bis 608. Abhängig von einem binären Signal an den Eingängen 603, 604 wird (nur) einer der Ausgänge 605 bis 608 aktiviert, d.h. logisch "1" (die verbleibenden Ausgänge sind dann inaktiv, d.h. logisch "0"). Die Eingänge 603, 604 sind beispielhaft für binäre Signale ausgelegt, so dass mit zwei Eingängen 2² Ausgänge 605 bis 608 adressiert werden können. Im Beispiel von Fig.6 gilt:
- Eingang 603: "0", Eingang 604: "0":
   Über den Ausgang 605 wird die Schnittstelle vom Typ RS-485 aktiviert;
- Eingang 603: "0", Eingang 604: "1":
   Über den Ausgang 606 wird die Schnittstelle vom Typ RS-422 aktiviert;
- Eingang 603: "1", Eingang 604: "0":
   Über den Ausgang 607 wird die Schnittstelle vom Typ RS-232 aktiviert;
- Eingang 603: "1", Eingang 604: "1":
   Über den Ausgang 608 wird die Schnittstelle vom Typ TTY aktiviert.

Der Ausgang 605 des Decoders 602 ist mit dem zweiten Eingang eines UND-Gatters 610 verbunden, der erste Eingang des UND-Gatters 610 ist mit einem Steuersignal (RTS) 609 verbunden. Der Ausgang des UND-Gatters 610 ist mit dem ersten Eingang eines ODER-Gatters 611 verbunden, wobei der zweite Eingang des ODER-Gatters 611 mit dem Ausgang 606 des Decoders 602 verbunden ist.

Der Ausgang des ODER-Gatters 611 ist mit dem Steuereingang eines Senders 628 verbunden, an dem Eingang des Senders 628 liegt an einem Anschluss 620 ein zu übermittelndes Datensignal (TXD) an. Der Sender 628 entspricht im Wesentlichen dem Sender 405 aus Fig.4, wobei der nichtinvertierende Ausgang des Senders 628 mit einem Anschluss 643 und der invertierende Ausgang des Senders 628 mit einem Anschluss 644 verbunden ist.

Der Sender 628 wie auch ein Empfänger 629 sind Teil eines Blocks 631 umfassend die Funktionalität einer RS-485 Schnittstelle. Der Anschluss 643 ist mit dem nichtinvertierenden Eingang des Empfängers 629 und der Anschluss 644 ist mit dem invertierenden Eingang des Empfängers 629 verbunden. Der Ausgang des Empfängers ist mit dem zweiten Eingang eines UND-Gatters 612 verbunden, dessen erster Eingang mit einem Knoten 614 verbunden ist. Der Knoten 614 ist mit dem Ausgang 605 des Decoders 602 verbunden. Der Knoten 614 ist weiterhin über einen Inverter 613 mit dem invertierten Steuereingang des Empfängers 629 verbunden. Der Ausgang des UND-Gatters 612 ist mit dem ersten Eingang eines ODER-Gatters 615 verbunden. Über den Ausgang des ODER-Gatters 615 wird an einem Anschluss 617 ein empfangenes Datensignal (RXD) bereitgestellt.

Der Block 631 ist weiterhin Teil eines Blocks 630, der die Funktionalität einer RS-422 Schnittstelle bereitstellt. Ein Sender 632 und ein Empfänger 633 sind entsprechend der Darstellung von Fig.4 angeordnet: Der Steuereingang des Senders 632 ist mit Masse GND verbunden, der Sender 632 ist somit inaktiv geschaltet. Ein Anschluss 645 ist mit dem nichtinvertierenden Eingang des Empfängers 633 und ein Anschluss 646 ist mit dem invertierenden Eingang des Empfängers 633 verbunden. Der nichtinvertierende Ausgang des Senders 632 ist mit dem Anschluss 645 und der invertierende Ausgang des Senders 632 ist mit dem Anschluss 646 verbunden. Der Ausgang des Empfängers 633 ist mit dem zweiten Eingang eines UND-Gatters 616 verbunden. Der erste Eingang des UND-Gatters 616 ist mit einem Knoten 619 verbunden. Der Knoten 619 ist mit dem Ausgang 606 des Decoders 602 verbunden. Der Knoten 619 ist über einen Inverter 618 mit dem invertierenden Steuereingang des Empfängers 633 verbunden. Der Ausgang des UND-Gatters 616 ist mit dem zweiten Eingang des ODER-Gatters 615 verbunden.

Der Ausgang 607 des Decoders 602 ist mit einem Knoten 621 verbunden. Der Knoten 621 ist mit dem Steuereingang eines Senders 635 verbunden. Der Eingang des Senders ist mit dem Anschluss 620 verbunden, an dem das zu übermittelnde Datensignal anliegt. Der invertierende Ausgang des Senders 635 ist mit dem Anschluss 643 verbunden. Der Knoten 621 ist mit einem Knoten 623 verbunden. Der Knoten 623 ist mit dem Steuereingang eines Empfängers 636 verbunden. Auch ist der Knoten 623 mit dem ersten Eingang eines UND-Gatters 622 verbunden. Der Eingang des Empfängers 636 ist mit dem Anschluss 645 verbunden. Der invertierende Ausgang des Empfängers 636 ist mit dem zweiten Eingang des UND-Gatters 622 verbunden. Der Ausgang des UND-Gatters 622 ist mit dem dritten Eingang des ODER-Gatters 615 verbunden. Der Sender 635 und der Empfänger 636 (jeweils auch bezeichnet als Treiberbaustein) stellen die Funktionalität der RS-232 Schnittstelle bereit (siehe Block 634), die - wie vorstehend ausgeführt wurde - über den Ausgang 607 des Decoders 602 selektiert werden kann.

Die TTY Schnittstelle wird mittels des Ausgangs 608 des Decoders 602 aktiviert. Ein Block 637 umfasst Komponenten der TTY Schnittstelle: Stromquellen 638 und 640 sowie Optokoppler 639, 641 und 642, wobei jeder Optokoppler eine Leuchtdiode sowie einen Transistor umfasst. Durch Aktivierung der Leuchtdiode wird die Basis des Transistors leitend, es fließt ein Strom durch Kollektor und Emitter des Transistors.

Der Ausgang 608 des Decoders 602 ist mit einem Knoten 627 verbunden. Der Knoten 627 ist mit der Stromquelle 638 verbunden, die bei Aktivierung über den Ausgang 608 ausgangsseitig an einem Anschluss 647 einen Strom von 20 mA bereitstellt. Der Knoten 627 ist mit dem ersten Eingang eines UND-Gatters 624 verbunden. Der zweite Eingang des UND-Gatters 624 ist mit dem Anschluss 620 verbunden, an dem das zu übermittelnde Datensignal anliegt. Der Ausgang des UND-Gatters 624 steuert die Leuchtdiode des Optokopplers 639 an, wobei der Kollektor des Transistors des Optokopplers 639 mit dem Anschluss 643 und sein Emitter mit dem Anschluss 644 verbunden ist.

Der Ausgang 608 des Decoders 602 ist mit einem Knoten 626 verbunden. Der Knoten 626 ist mit der Stromquelle 640 verbunden, die bei Aktivierung über den Ausgang 608 ausgangsseitig an einem Anschluss 648 einen Strom von 20 mA bereitstellt. Der Knoten 626 ist mit dem ersten Eingang eines UND-Gatters 625 verbunden. Der zweite Eingang des UND-Gatters 625 wird über den Ausgang des Optokopplers (d.h. die Kollektor-Emitter-Strecke des Transistors) angesteuert. Der Ausgang des UND-Gatters 625 ist mit dem vierten Eingang des ODER-Gatters 615 verbunden.

Der Ausgang 608 des Decoders 602 steuert auch die Leuchtdiode des Optokopplers 642 an. Die Leuchtdiode des Optokopplers 641 ist mit der Kollektor-Emitter-Strecke des Transistors des Optokopplers 642 in Reihe geschaltet, d.h. die Anode der Leuchtdiode ist mit dem Anschluss 645 und der Emitter des Transistors ist mit dem Anschluss 646 verbunden.

Sofern dies für den jeweiligen Schnittstellentyp benötigt wird, ist in Fig.6 auch eine Versorgung mit Masse GND 649 dargestellt.

Die Funktionsweise der Schnittstellen vom Typ RS-485 und RS-422 entspricht im Wesentlichen Fig.4 mit zugehöriger Beschreibung. Die RS-485 Schnittstelle wird über den Ausgang 605 aktiviert; in diesem Fall werden die Anschlüsse 643 und 644 genutzt um - je nach Einstellung des Steuersignals 609 - ein differentielles Signal zu empfangen und zu versenden. Die RS-422 Schnittstelle wird über den Ausgang 606 aktiviert; in diesem Fall werden die Anschlüsse 643 und 644 zur Übermittlung des differentiellen Signals und die Anschlüsse 645 und 646 zum Empfangen des differentiellen Signals genutzt.

Die Schnittstelle vom Typ RS-232 wird über den Ausgang 607 aktiviert; dadurch werden auch Sender und Empfänger aktiviert sowie der erste Anschluss des UND-Gatters 622 auf logisch "1" gelegt. Somit können der Anschluss 643 zur Übermittlung und der Anschluss 645 zum Empfangen von RS-232 Daten genutzt werden.

Die TTY Schnittstelle wird über den Ausgang 608 aktiviert. In diesem Fall werden an den Anschlüssen 647 und 648 jeweils 20 mA bereitgestellt. Die Anschlüsse 643 und 644 werden zur Übermittlung eines differentiellen Signals und die Anschlüsse 645 und 646 zum Empfangen eines differentiellen Signals genutzt. Durch die vorstehend beschriebenen Verschaltung des Optokopplers 641 mit dem Optokoppler 642 ist sichergestellt, dass die Leuchtdiode des als Empfänger agierenden Optokopplers 641 nur dann leuchten kann, wenn der Ausgang 608 aktiv ist. So wird verhindert, dass der Optokoppler 641 auch dann Signale detektiert und weiterleitet, wenn dies keine Signale für die TTY Schnittstelle sind.

Im Fall der RS-232 Schnittstelle und im Fall der TTY Schnittstelle wird über die Anschlüsse 649 ein Bezugspotential Masse GND bereitgestellt.

In den vorstehend beschriebenen Fällen liegt das zu übertragende Datensignal an dem Anschluss 620 an und das empfangene Datensignal kann an dem Anschluss 617 abgegriffen werden.

Beispielsweise können der Decoder 602 und die Logikbausteine in einen programmierbaren Chip, z.B. einen FPGA integriert sein. Dies ist in Fig.6 durch den Block 601 angedeutet.

Der vorgestellte Ansatz kann vorteilhaft auf weitere Schnittstellen z.B. von Bussystemen erweitert werden, umfassend z.B.
- einen Profibus, der als zweiadrige RS-485 Schnittstelle ausgestaltet ist,
- einen DIN-Bus, der als eine vieradrige RS-485 Schnittstelle ausgestaltet ist,
- einen multifunktionalen Fahrzeug-Bus (MVB: Multifunction Vehicle Bus) in einer ESD-Ausführung (ESD: Electrical Short Distance, elektrisch kurze Distanzen), insbesondere unter Verwendung von zwei Sub-D (9 poligen) Steckverbindern zum Durchschleifen des Busses.

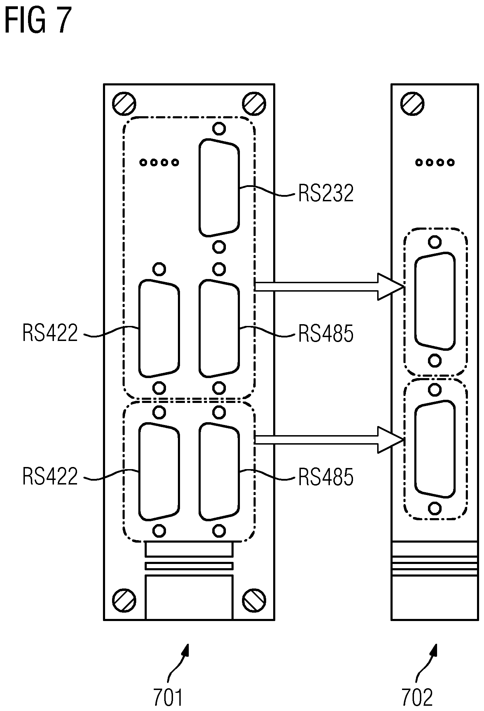

Fig.7 zeigt beispielhaft eine schematische Darstellung einer Anschlussseite einer herkömmlichen Schnittstellenkarte 701 sowie einer durch den vorliegenden Ansatz realisierbaren Schnittstellenkarte 702.

Bei der Schnittstellenkarte 701 ist pro Schnittstellentyp ein eigener Steckverbinder vorgesehen. Die hier vorgestellte Lösung ermöglicht es, mehrere Schnittstellentypen z.B. mittels Softwarekonfiguration flexibel einem Steckverbinder zuzuordnen. Somit weist die Schnittstellenkarte 702 beispielhaft nur noch zwei der fünf Steckverbinder auf. Dies spart Platz, Kosten und ermöglicht zudem die fehlerunanfällige Konfiguration z.B. über eine Zentrale mittels Software.

### Weitere Vorteile und Beispiele

Die hier vorgestellte Lösung ermöglicht die flexible Konfiguration von Schnittstellen z.B. mittels Software. Hierbei können z.B. Hardware-Brücken, Steckbrücken oder sonstige manuelle und umständlich zu platzierende Verbindungen eingespart werden.

Ein weiterer Vorteil ist es, dass universell verwendbare Geräte mit hohem Gleichanteil für eine Vielzahl unterschiedlicher Schnittstellentypen bereitgestellt werden können. Dies spart Entwicklungs- und Logistikkosten, durch den reduzierten Bauraum ist es weiterhin möglich, kleine und universell einsetzbare Geräte anzubieten.

Die Schnittstellentypen RS-484, RS-422, RS-232, TTY, etc. sind lediglich beispielhaft genannt. Die vorgeschlagene Lösung ist entsprechend für andere Schnittstellen sowie Bussysteme einsetzbar.

Optional kann insbesondere der Typ einer Schnittstelle automatisch erkannt werden, indem je nach selektierter Schnittstelle ein Vergleich mit mindestens einem vorgegebenen Signal durchgeführt wird. Derartige Vergleiche können iterativ erfolgen (indem nach einer vorgegebenen Zeitdauer ein anderer Schnittstellentyp selektiert wird) bis ein Schnittstellentyp erkannt und/oder bis eine vorgegebene Zeitdauer erreicht wurde.

Obwohl die Erfindung im Detail durch das mindestens eine gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

### Bezugszeichenliste

- 110: zu übermittelndes Datensignal
- 111: empfangenes Datensignal
- 112: Steuersignal
- 120: Sender
- 130: Empfänger
- 140: Einheit (galvanische Trennung)
- 150: Einheit (Busterminierung, Schutzschaltung)
- 160, 161: Anschluss
- 170, 171: Knoten

- 201, 202: serielle Schnittstelle
- 210: zu übermittelndes Datensignal
- 211: empfangenes Datensignal
- 220, 222: Sender
- 221, 223: Empfänger
- 270: differentielles Sendesignal
- 271: differentielles Empfangssignal

- 301, 302: serielle Schnittstelle
- 310: zu übermittelndes Datensignal
- 311: empfangenes Datensignal
- 312: Steuersignal
- 330, 332: Sender
- 331, 333: Empfänger
- 340, 341: Stiftleiste
- 345-348: Hardware-Jumper
- 370: Knoten

- 401: Steuersignal
- 402: Auswahlsignal
- 403: zu übermittelndes Datensignal
- 404: empfangenes Datensignal
- 405, 406: Sender
- 407, 408: Empfänger
- 409, 413: ODER-Gatter
- 410, 414: Inverter (NICHT-Gatter)
- 411, 412: UND-Gatter
- 415-417: Knoten
- 418: Logikblock (Sende-Logikblock)
- 419: Logikblock (Empfangs-Logikblock)
- 420-423: Anschluss
- 414, 425: Einheit (galvanische Trennung)
- 426-429: Einheit (Busterminierung, Schutzschaltung)

- 501: programmierbarer Baustein

- 601: Block (z.B. FPGA)
- 602: Decoder
- 603, 604: Eingang des Decoders 602
- 605-608: Ausgang des Decoders 602
- 609: Steuersignal
- 610, 612, 616, 622, 624, 625: UND-Gatter
- 611, 615: ODER-Gatter
- 613, 618: Inverter
- 614, 619, 621, 623, 626, 627: Knoten
- 617: Anschluss (empfangenes Datensignal)
- 620: Anschluss (zu übermittelndes Datensignal)
- 628, 632: Sender
- 629, 633: Empfänger
- 630: Block (RS-422)
- 631: Block (RS-485)
- 634: Block (RS-232)
- 635: Sender
- 636: Empfänger
- 637: Block (TTY)
- 638, 640: Stromquelle
- 639, 641, 642: Optokoppler
- 643-649: Anschluss

- 701, 702: Schnittstellenkarte

## Patentansprüche

1. Vorrichtung
- umfassend eine Schnittstelleneinheit (405-408, 418, 419),
- wobei die Schnittstelleneinheit (405-408, 418, 419) derart eingerichtet ist, dass abhängig von einem Auswahlsignal (402) ein Schnittstellentyp aus mindestens zwei Schnittstellentypen selektierbar ist,
**dadurch gekennzeichnet, dass**
- mittels des Auswahlsignals, welches mittels eines ablaufenden Programms bereitgestellt wird, nacheinander unterschiedliche Schnittstellentypen aus den mindestens zwei Schnittstellentypen vorübergehend selektierbar sind,
- wobei derjenige Schnittstellentyp länger als die vorgegebene Zeitdauer selektiert wird, für den ein vorgegebenes Signal bestimmbar ist.

2. Vorrichtung nach Anspruch 1,
- wobei die Schnittstelleneinheit eine Logikeinheit (418, 419) und mindestens zwei Treiber (405-408) aufweist, wobei für jeden Schnittstellentyp mindestens ein Treiber vorgesehen ist,
- wobei anhand des Auswahlsignals (402) über die Logikeinheit der Schnittstellentyp selektierbar ist.

3. Vorrichtung nach einem der vorhergehenden Ansprüche, bei der die Logikeinheit Teil eines programmierbaren Bausteins (501) ist.

4. Vorrichtung nach Anspruch 3, bei der pro Schnittstellentyp ein Sender (405, 406) und ein Empfänger (407, 408) vorgesehen sind.

5. Vorrichtung nach einem der vorhergehenden Ansprüche, bei der anhand der Schnittstelleneinheit
- ein zu übermittelndes Datensignal (403) mittels des selektierten Schnittstellentyps übertragbar ist und
- über den selektierten Schnittstellentyp ein Datensignal (404) empfangbar ist.

6. Vorrichtung nach einem der vorhergehenden Ansprüche umfassend einen Steckverbinder, dessen Kontakte entsprechend des selektierten Schnittstellentyps belegbar sind.

7. Vorrichtung nach Anspruch 6, bei der der Steckverbinder ein Sub-D Steckverbinder ist.

8. Vorrichtung nach einem der vorhergehenden Ansprüche, wobei der Schnittstellentyp einer der folgenden ist:
- eine RS-485 Schnittstelle;
- eine RS-422 Schnittstelle;
- eine RS-232 Schnittstelle;
- eine Stromschleife.

9. Vorrichtung nach einem der vorhergehenden Ansprüche mit einer Auswahleinheit (602), die abhängig von dem Auswahlsignal den Schnittstellentyp aus mindestens zwei Schnittstellentypen selektiert.

10. Vorrichtung nach Anspruch 9, bei der die Auswahleinheit ein 1-aus-n Decoder ist.

11. Vorrichtung nach einem der vorhergehenden Ansprüche, bei dem das vorgegebene Signal ein gültiges Datentelegramm umfasst.

12. Verfahren zur Selektion eines Schnittstellentyps, bei dem abhängig von einem Auswahlsignal (402) ein Schnittstellentyp aus mindestens zwei Schnittstellentypen selektiert wird,
**dadurch gekennzeichnet, dass**
- mittels des Auswahlsignals, welches mittels eines ablaufenden Programms bereitgestellt wird, nacheinander unterschiedliche Schnittstellentypen aus den mindestens zwei Schnittstellentypen für eine vorgegebene Zeitdauer selektiert werden,
- wobei derjenige Schnittstellentyp länger als die vorgegebene Zeitdauer selektiert wird, für den ein vorgegebenes Signal bestimmbar ist.

13. Verfahren nach Anspruch 12, bei dem die mindestens zwei Schnittstellentypen serielle Kommunikationsschnittstellen sind.

14. Verfahren nach einem der Ansprüche 12 oder 1 3, bei dem
das vorgegebene Signal ein gültiges Datentelegramm umfasst.

15. System umfassend mindestens eine Vorrichtung nach einem der Ansprüche 1 bis 11.

## Claims

1. Device
- comprising an interface unit (405-408, 418, 419),
- wherein the interface unit (405-408, 418, 419) is configured such that an interface type can be selected from at least two interface types as a function of a selection signal (402),
**characterised in that**
- different interface types can be consecutively selected temporarily from the at least two interface types by means of the selection signal, which is provided by means of a running program,
- wherein that interface type for which a predetermined signal can be determined is selected for longer than the predetermined period of time.

2. Device according to claim 1,
- wherein the interface unit has a logic unit (418, 419) and at least two drivers (405-408), wherein at least one driver is provided for each interface type,
- wherein on the basis of the selection signal (402) the interface type can be selected by way of the logic unit.

3. Device according to one of the preceding claims, in which the logic unit is part of a programmable module (501).

4. Device according to claim 3, in which a transmitter (405, 406) and a receiver (407, 408) are provided per interface type.

5. Device according to one of the preceding claims, in which on the basis of the interface unit
- a data signal (403) to be transferred can be transmitted by means of the selected interface type and
- a data signal (404) can be received by way of the selected interface type.

6. Device according to one of the preceding claims, comprising a plug-in connector, the contacts of which can be populated according to the selected interface type.

7. Device according to claim 6, in which the plug-in connector is a sub-D plug-in connector.

8. Device according to one of the preceding claims, wherein the interface type is one of the following:
- an RS-485 interface;
- an RS-422 interface;
- an RS-232 interface;
- a current loop.

9. Device according to one of the preceding claims with a selection unit (602), which selects the interface type from at least two interface types as a function of the selection signal.

10. Device according to claim 9, in which the selection unit is a 1-of-n decoder.

11. Device according to one of the preceding claims, in which the predetermined signal comprises a valid data telegram.

12. Method for selecting an interface type, in which an interface type is selected from at least two interface types as a function of a selection signal (402),
**characterised in that**
- by means of the selection signal, which is provided by means of a running program, different interface types are selected consecutively from the at least two interface types for a predetermined period of time,
- wherein that interface type, for which a predetermined signal can be determined, is selected for longer than the predetermined period of time.

13. Method according to claim 12, in which the at least two interface types are serial communication interfaces.

14. Method according to one of claims 12 or 13, in which the predetermined signal comprises a valid data telegram.

15. System comprising at least one device according to one of claims 1 to 11.

## Revendications

1. Dispositif
- comprenant une unité (405 à 408, 48, 419) d'interface,
- dans lequel l'unité (405 à 408, 48, 419) d'interface est agencée de manière à pouvoir, en fonction d'un signal (402) de sélection, sélectionner un type d'interface entre au moins deux types d'interface,
**caractérisé en ce que**
- au moyen du signal de sélection, qui est mis à disposition au moyen d'un programme en cours d'exécution, des types d'interface différents, parmi les au moins deux types d'interface, peuvent être sélectionnés transitoirement les uns après les autres,
- dans lequel il est sélectionné le type d'interface plus long que la durée donnée à l'avance, pour lequel un signal donné à l'avance peut être déterminé.

2. Dispositif suivant la revendication 1,
- dans lequel l'unité d'interface a une unité (418, 419) logique et au moins deux pilotes (405 à 408), au moins un pilote étant prévu pour chaque type d'interface,
- dans lequel le type d'interface peut être sélectionné par l'unité logique à l'aide du signal (402) de sélection.

3. Dispositif suivant l'une des revendications précédentes, dans lequel l'unité logique fait partie d'un module (501) programmable.

4. Dispositif suivant la revendication 3, dans lequel il est prévu un émetteur (405, 406) et un récepteur (407, 408) par type d'interface.

5. Dispositif suivant l'une des revendications précédentes, dans lequel, à l'aide de l'unité d'interface
- un signal (403) de données à transmettre peut être transmis au moyen du type d'interface sélectionné et
- un signal (404) de données peut être reçu par l'intermédiaire du type d'interface sélectionné.

6. Dispositif suivant l'une des revendications précédentes, comprenant un connecteur à enfichage, dont les contacts peuvent être occupés en fonction du type d'interface sélectionné.

7. Dispositif suivant la revendication 6, dans lequel le connecteur à enfichage est un connecteur à enfichage sous-D.

8. Dispositif suivant l'une des revendications précédentes, dans lequel le type d'interface est l'un des suivants :
- une interface RS-485;
- une interface RS-422;
- une interface RS-232.
- une boucle de courant.

9. Dispositif suivant l'une des revendications précédentes, comprenant une unité (602) de sélection, qui sélectionne, en fonction du signal de sélection, le type d'interface parmi au moins deux types d'interface.

10. Dispositif suivant la revendication 9, dans lequel l'unité de sélection est un décodeur 1 parmi n.

11. Dispositif suivant l'une des revendications précédentes, dans lequel le signal donné à l'avance comprend un télégramme de données valable.

12. Procédé de sélection d'un type d'interface, dans lequel on sélectionne un type d'interface parmi au moins deux types d'interface en fonction d'un signal (402) de sélection, **caractérisé en ce que**
- au moyen du signal de sélection, qui est mis à disposition au moyen d'un programme en cours d'exécution, on sélectionne, pendant une durée donnée à l'avance, les uns après les autres, des types d'interface différents parmi les au moins deux types d'interface,
- dans lequel on sélectionne le type d'interface plus long que la durée donnée à l'avance, pour lequel un signal donné à l'avance peut être déterminé.

13. Procédé suivant la revendication 12, dans lequel les au moins deux types d'interface sont des interfaces de communication série.

14. Procédé suivant l'une des revendications 12 ou 13, dans lequel le signal donné à l'avance comprend un télégramme de données valable.

15. Système comprenant au moins un dispositif suivant l'une des revendications 1 à 11.
